# EUROPEAN PATENT SPECIFICATION

(11) **EP 3 394 635 B1**
(45) Date of publication and mention of the grant of the patent: **26.05.2021**
(21) Application number: 16871882.3
(22) Date of filing: 20.12.2016
(51) Int. Cl.: G01C 22/00, B60C 99/00, G01S 19/47, G01S 19/49, G01S 13/74, H04B 5/00, G06K 19/077, H01Q 1/22, H01Q 1/32, H01Q 1/40, H01Q 21/28, H01Q 7/00

(54) **VEHICLE POSITIONING WITH RFID TAGS**
FAHRZEUGPOSITIONIERUNG MIT RFID-ETIKETTEN
LOCALISATION DE VÉHICULES AU MOYEN D'ÉTIQUETTES RFID

(30) Priority: 21.12.2015 US 201562270112 P
(43) Date of publication of application: 31.10.2018
(73) Proprietor: Genetec Inc., St-Laurent, Québec H4S 2A4 (CA)
(72) Inventor: ROY, Danny, Blainville, Québec J7C 1S3 (CA); NOHAVA, Vladimir, Ville Saint-Laurent, Québec H4R 3M4 (CA)
(74) Representative: IPAZ
(86) International application number: PCT/CA2016/051513
(87) International publication number: WO 2017/096493

(56) References cited:
- EP-A1- 1 615 784
- KR-A- 20080 077 456
- KR-B1- 101 210 399
- US-A- 5 562 787
- US-A1- 2003 122 661
- US-A1- 2005 221 704
- US-A1- 2006 290 484
- US-A1- 2006 290 505
- US-A1- 2014 104 052
- US-A1- 2016 323 659

## Description

### Cross-Reference to Related Application

The present application claims priority on U.S. provisional patent application no. 62/270,112 having a filing date of December 21, 2015.

### Technical Field

This patent application relates to the field of vehicle positioning and particularly of vehicle positioning using RFID tags. This patent application also relates to the field of embedding RFID tags and particularly embedding RFID tags in vehicle wheels and more particularly to embedding RFID tags in vehicle tires. This application also relates to providing RFID capability to vehicles and more particularly to providing RFID reading capability in proximity to a vehicle wheel.

### Background

GPS systems are available on vehicles to provide vehicle positional information to users as well as to onboard systems using vehicle positional information and even in some cases to external systems such as to fleet tracking systems.

GPS solutions are less than perfectly accurate because of errors in acquiring their pseudo-ranges. With the Government no longer degrading the signal the majority of the error come from several factors which include
a. Atmosphere: As the signal passes through the ionosphere (a band of ions and free electrons, between 80 and 120 mile up) its speed is reduced. This delays the signals arrival at the receiver, thereby effecting the distance calculation. The amount of water vapor in the atmosphere can also affect this time delay.
b. Timing: The clocks in the satellites are very near perfect (million dollar atomic clocks) but the clocks in the receivers are not as good. A discrepancy of 1/100th of a second can make for an 1800-mile change in position, maybe putting you in a different Country or even continent.
c. Multipathing: The signal from a satellite can be reflected off of a building or some other large reflective object before reaching the receiver, again delaying its arrival. If the direct signal is also acquired, the software in most modern receivers can reject the indirect signals. But multipath can confuse the calculations for position.
d. Satellite Positional Errors: The gravitational pull of the sun and moon on a satellite can distort its orbit. These minor disturbances can add some error.
e. Satellite Geometry: The relative position of the satellites to each other in the sky above you can affect the accuracy. The intersection of four or more pseudo-ranges gives you a position but as the angle between the satellites gets smaller (or as the satellites get closer to each other) the effect of the above errors on the resulting position is increased. If all of the satellites are grouped together in one part of the sky the results will be less accurate than if the satellites well spread over the whole sky.

Together, these errors can account for meters of error. There are several applications, however, that require more precise vehicle location than can be afforded by GPS. For this reason, GPS is sometimes assisted, e.g. by cellular network. That said cellular network signals are also subject to issues affecting accuracy and even assisted GPS is subject to errors that are too high for some applications. Moreover, both assisted and unassisted GPS can be ineffective in certain situations. For example, when a vehicle is in an underground parking garage or tunnel, the signals required for positioning may not reach the vehicle.

Dead reckoning may be used, e.g., in combination with GPS systems to provide higher positional accuracy or to provide continued position estimation when GPS coverage fails. To this end, vehicle odometry systems may be tapped by a tracking device to supplement GPS data with travel distance data (also known as wheel ticks, pulses, speed pulses, ticks, etc...). Dead reckoning may be useful in areas where GPS signal is absent, as it allows estimation of position where it would otherwise be impossible. Odometry data can be used in a number of different ways with varying levels of sophistication. Techniques for determining vehicle orientation and map-matching can increase the accuracy of estimated positions.

Vehicle odometry systems, however, are not always accessible and wire taps are not always present. In some vehicles, odometry signals may be unreliable.

RFID tags come in different varieties. Most commonly, tags fall into the UHF RFID variety, the HF RFID variety, and the LF variety. LF RFID tags operate in the 125KHz - 135KHz range, e.g. under the standard ISO 18000-2. UHF RFID tags operate in the 300 MHz - 3 GHz range, e.g. under the standard ISO 18000-6. HF RFID tags operate in the 3 MHZ - 30 MHz range, e.g. under the standard ISO 18000-3 using magnetic resonance. Antenna dimensions for an RFID tag depend on tag type, as well as on other factors such as purpose, communication distance between the tag and reader and power of the reader signal. UHF RFID tags typically have small spring-shaped antennae whereas HF antennae are typically larger flat coils. Battery powered tags can typically have a smaller antenna for a given purpose since they can be powered to provide a stronger return signal than a same-sized antenna powered by the remote reader alone.

RFID tags have been embedded into tires for the purposes of inventory management. For this, UHF RFID tags are used with very small antennae that stick out on either side of the chip by only a short distance. These little tags can be embedded directly into the tire. Provided that a powerful enough reader is used, they can be read at a large distance. Due to their small size and flexibility, these tags are well suited for surviving the harsh conditions present in a tire US2006/290484 A1 discloses a system comprising HF RFID tags embedded in a tire of a vehicle and RFID reader antenna positioned at a predetermined distance from the tire. KR2008/0077456 A discloses a RFID tag for a tire with reinforcing material for strengthened durability.

### Summary

Applicant has made a number of improvements that taken alone or in combination can provide advantages over the state-of-the-art approaches.

In accordance with the invention is provided an HF RFID device for affixing to a surface of a vehicle tire according to claim 1. Further details are described in the dependent claims.

### Brief Description of the Drawings

The invention will be better understood by way of the following detailed description of embodiments of the invention with reference to the appended drawings, in which:
Figure 1 shows a vehicle positioning system installed in a vehicle in accordance with a non-limiting example;
Figure 2 shows a block diagram of a controller for the vehicle positioning system of Figure 1 along with some connected components;

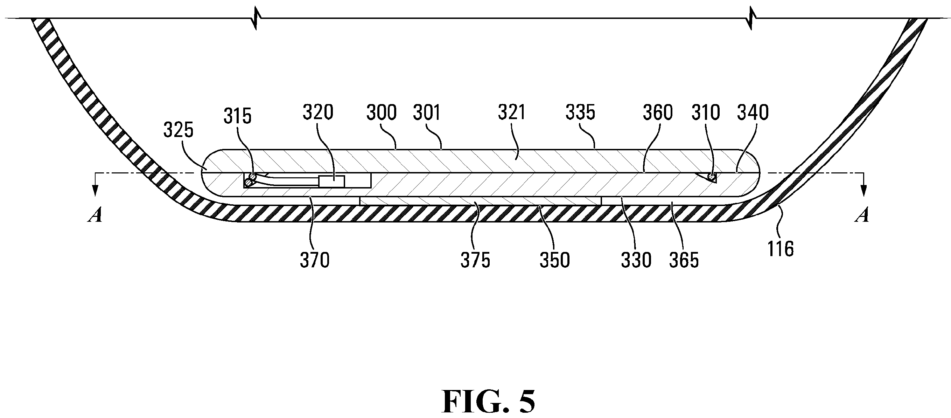

Figure 3A shows top plan view of an RFID device shown in Figure 5;
Figure 3B shows top plan cross-sectional view of an RFID device taken along the line B-B shown in Figure 5, showing a bottom layer;
Figure 3C shows a cap portion of the RFID device of Figure 3A;
Figure 4 shows an RFID antenna for use in the vehicle positioning system of figure 1;
Figure 5 shows a side elevation cross section view of the RFID device of Figure 3A taken along the line A-A shown in Figure 3A; and
Figure 6 shows an exemplary installation of an RFID antenna in the wheel well of a vehicle.

### Detailed Description

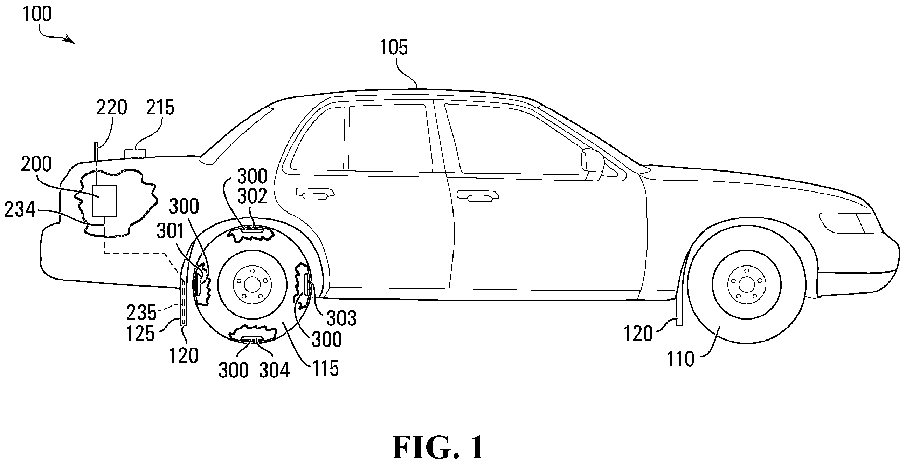

Figure 1 shows a vehicle positioning system 100 in a vehicle 105. The vehicle 105 comprises a set of wheels 110, including at least one tagged wheel 115 that is provided with a set of affixable RFID devices 300. Each wheel 110 typically has a tire and in this example, the tagged wheel 115 comprises a tire 116 and the set of RFID devices 300 is provided on the tire 116. The vehicle 105 also comprises mudguards 120, including an antenna mudguard 125, having an RFID antenna 235 provided thereon. The vehicle positioning system 100 comprises a controller 200, which in this example is a hardware device located in the trunk of the vehicle 105, although it may be mounted or provided in the vehicle 105 in other ways.

The vehicle positioning system 100 employs dead reckoning, in this case in conjunction with a locating system, in this example a GPS system, to ascertain a position, or a change in position of the vehicle 105. Vehicle positioning uses available information to establish a location of a vehicle, a travel path or travel distance of a vehicle, a vehicle speed, or a vehicle displacement. In this particular example, the vehicle positioning system 100 ascertains a vehicle location and in particular uses dead reckoning to derive a more accurate location than is possible with GPS alone as well as to track location when GPS service is unavailable such as when the vehicle 105 is in a tunnel, car parking lot, or otherwise outside of GPS signal range.

There are a variety of reasons for which it may be desired to obtain a vehicle location that is accurate to a degree higher than the precision of GPS. For example in surveillance vehicles that monitor parking violations, it may be desired to determine that a parked vehicle has remained in the same position for longer than a prescribed period of time. By analysing images of the parked vehicle's wheel positions, together with the parked vehicle's precise location, at two different times it may be determined with a great degree of certainty that the vehicle has remained unmoved. The position of the parked vehicle may be ascertained from images of the parked vehicle, however this requires precise knowledge of the camera's position, which if located on a surveillance vehicle requires precise knowledge of the surveillance vehicle's position. This is only one example of application requiring precise vehicle location. GPS systems, even augmented GPS systems, typically do not provide accuracy in the range of centimeters.

Vehicle positioning system 100 combines GPS data with accurate travel data determined using dead reckoning to derive a more accurate vehicle location using a tightly-coupled Kalman filter algorithm, which is used to determine vehicle location based on weighted averages of multiple sensor data inputs provided by the GPS, wheel ticks, and, optionally, the gyroscope 250. During times of good GPS signal reception, the measurements from the vehicle sensors are constantly calibrated. If late a situation with bad or no GPS signal occurs, the system continues to provide highly accurate location based on vehicle sensor inputs.

Dead reckoning data is data indicative of the movement of the vehicle 105. In a simple form, it may be simply travel distance data indicating a scalar value as would be provided by a typical vehicle odometer. Even simple travel distance may be useful for improving GPS location and even for ascertaining vehicle 105's location outside of GPS range (e.g. in a tunnel), the latter particularly so if geographical information can be used for map-matching. In this particular example, however, the vehicle positioning system 100 employs a more sophisticated system of dead reckoning which combines travel distance data with gyroscope data (which provides information on vehicle rotation/orientation), accelerometer data (which provides information on front-to-back and lateral acceleration) and compass data (which provides vehicle bearing information). In the present example, a three-axis gyroscope is used, such that a correctly-aligned yaw rate can be obtained even if the gyroscope 250 isn't perfectly aligned. Likewise the accelerometer is a three-axis accelerometer which can provide x-axis (front to back) acceleration data but also be used to improve height estimation accuracy. The compass may be omitted.

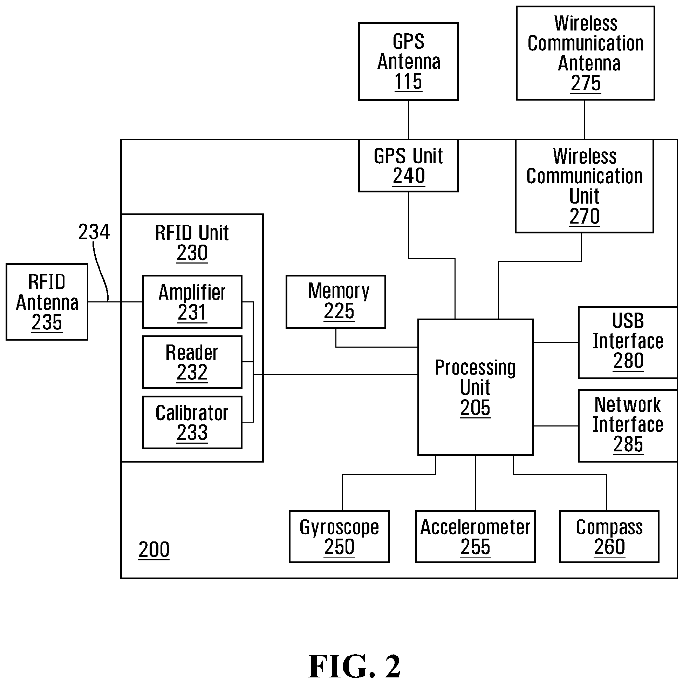

As illustrated in Figure 2, the vehicle positioning system 100 comprises a controller 200. The controller 200 comprises hardware for performing vehicle positioning. The controller 200 comprises a processing unit 205, memory 225, an RFID unit 230, a GPS unit 240, a wireless communication unit 270, a gyroscope 250, an accelerometer 255, a compass 260, a wireless communication unit 270, a USB interface 280 and a Network Interface 285. The illustrated architecture is merely an example intended to provide the reader with a working understanding of the invention, however it should be understood that other architectures may be used. For example, in another embodiment a single global navigation satellite system (GNSS) unit may comprise the GPS unit, a three-axis gyroscope, and a three-axis accelerometer. Moreover, the USB interface connected to the processing unit 205 may be absent, but the GNSS unit may have a USB interface.

The processing unit 205 in this example comprises an ARM-based microcontroller, specifically in this case the microcontroller STM32F207VCT6™ by ST™. The controller 200 also comprises memory 225, shown here as a single unit for simplicity although a skilled person will understand the various configurations of memory possible. The memory 225 is a tangible memory and comprises computer-readable instructions in the form of software code executable by processing unit 205 to cause the processing unit 205 to perform vehicle positioning as described herein. In this particular example, the controller 200 has been provided a general-purpose microcontroller and software to perform vehicle positioning; this configuration has been chosen to provide design flexibility and to allow the controller 200 to be programmed to perform other functions. However, it is to be understood that the processing logic of the controller 200 performing vehicle positioning may alternatively be provided by hardware implementations such as with an FPGA programmed to implement the logic described herein, or an ASIC designed to implement the logic described herein.

The GPS 240 unit is a standard GPS module that is in communication with a GPS antenna 245, which in this example is an off board antenna mounted on the exterior of the vehicle 105 for greater coverage. The GPS unit 240 derives from GPS signals received by the GPS antenna 245 GPS data which is communicated to the processing unit 205 in this case using asynchronous serial communication via a UART.

The wireless communication unit 270 communicates information over a wireless, e.g. 3G or WiFi™, link using a wireless communication antenna 275, which in this example is provided separately. The wireless communication unit 270 communicates with the processing unit 205 to receive therefrom information to transmit and to provide thereto information received over the wireless communication link. This allows, e.g., cellular network connectivity to allow the controller 200 to provide vehicle positional information to a remote device.

In this example, the processing unit 205 has onboard USB communication capability and is in communication with the USB interface 280 which provides a physical link through which a USB device can be connected. USB can be used to download data, e.g. historical vehicle positional information, to a USB storage and to upload data, e.g. new software. Here again, the architecture shown is only an example meant to provide the reader with command of the invention. Other architectures are possible and in an alternate embodiment, the function of the USB interface 280 may be provided via the network interface 285 or some function may be omitted. Likewise certain components such as the GPS unit 240 (or GNSS unit described above) and the wireless communication unit 270 may themselves have USB interface, e.g. used for debugging.

In this example, the controller 200 further comprises a network interface 285, e.g., and Ethernet interface for communicating data, e.g. vehicle positional information data or software updates.

The controller 200 in this example further comprises physical sensors including a gyroscope 250, an accelerometer 255 and a compass 260. These provide additional information on the orientation of the vehicle and motion thereof which is used by the processing unit 205 to derive dead reckoning data.

The RFID unit 230 communicates via a connected RFID antenna 235 with the tags of set of RFID devices 300. The RFID unit is in communication with the processing unit 205, in this example via an SPI connection. The RFID unit 230 comprises an amplifier 231, a reading unit 232 and a calibrating unit 233. In the present example, the RFID unit 230 comprises RFID reader chip CLRC663™ by NXP™. The RFID unit 230 is connected to the RFID antenna 235 via an insulated coaxial antenna cable 234.

Although the controller 200 is a single hardware device in this example, the controller 200 could be distributed. Moreover, the controller 200 need not include every component shown here; some components may be absent or be provided externally outside of, and in communication with, the controller 200.

The RFID antenna 235 is mounted on the vehicle 105 in proximity to the wheel 110, preferably in the wheel well or adjacent thereto. The vehicle 105 comprises at least one wheel 115 that is provided with the set of RFID devices 300, specifically in this case in the tire 116. The RFID antenna 235 is mounted in mudguard 125 so as to be within range to read the RFID devices passing in front of it as the tire 116 rotates. Advantageously, since mudguards are generally an easily replaced vehicle component, installing the RFID antenna 235 can be as easy as replacing a standard mudguard with the antenna-bearing mudguard 125. The mudguard 125 is made of non-interfering material such as rubber, and preferably completely encapsulates the antenna 235 such that it cannot be seen from a casual observer's standpoint. The antenna cable 234 protrudes from the mudguard 125 at a top end thereof inside the wheel well such that it is not visible from the perspective of someone who is standing near the vehicle. Making the antenna 235 invisible to casual observers protects the antenna 235 from tampering of vandalism ill-intending individuals who do not know it is there.

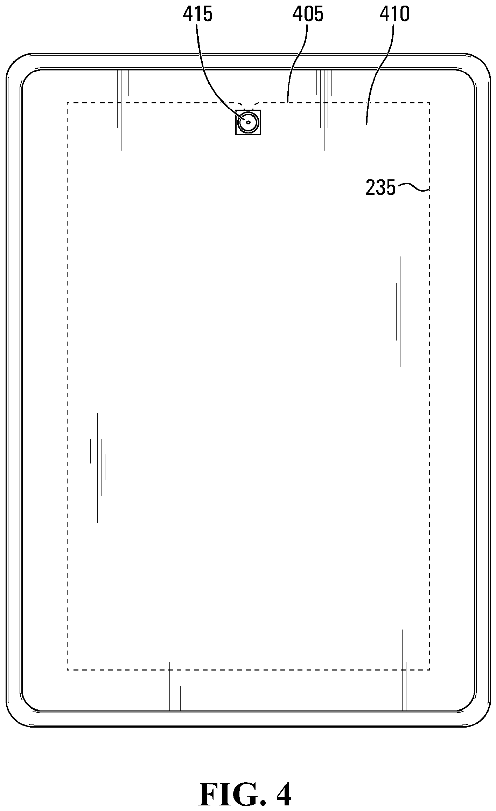

The RFID antenna 235 of this example is illustrated in Figure 4. In this example, the RFID antenna 235 is an ISO 1800-3M3 compliant antenna made of copper antenna material 405 coiled in a rounded rectangular shape on a PCB board 410, although other media may be used. In this example the RFID antenna 235 is made in a coil having a rectangular form with rounded corners made up of two turns with has dimensions of 175mm x 110mm, although dimensions of 150mm x 100mm have also been successfully used and other shapes and sizes may be used. A bigger antenna may increase reading distance but has the disadvantage of being less adapted to the mounting/wheel well dimensions. The RFID antenna 235 is characterized by 1.7µH // 7.6pF in this example. Passive components (resistors, capacitors) are used to tune the RFID antenna 235 with the RFID frequency of 13.56MHz. Once the antenna is encapsulated, e.g. in rubber, the dielectric constant is changed by the presence of the encapsulating material and therefore the antenna is re-tuned to 13.56MHz by changing the passive components. Decreasing the inductance reduces the reading range. However increasing the inductance comes at the price of increasing the parallel capacitance which reduces reading performance. Experimentally, it has been found that an inductance of 1µH to 4µH may work with 1.7µH being preferred. The 13.56MHz carrier signal is set to 4.5V peak-to-peak in a 50Ω load. The source of this carrier is the transmitter of the CLRC663. This carrier signal is then radiated from the RFID antenna 235, the amplitude of which will be slightly altered by RFID tag in proximity, which change is detected by the RFID reader. The input of the RFID reader has a voltage limit of approximately 4V peak-to-peak to 4.5V peak-to-peak. Although the CLRC663 can be set to output a signal as high as 8V peak-to-peak, it has been found that if the amplitude is too high, the diodes connected at the RFID reader will limit the voltage which degrades the reading performance. The RFID antenna 235 receives the signal over the antenna cable 234 and comprises an SMA connector 415 to connect thereto. In this example, the SMA connector is partly embedded but sufficiently protrudes to allow the cable to connect.

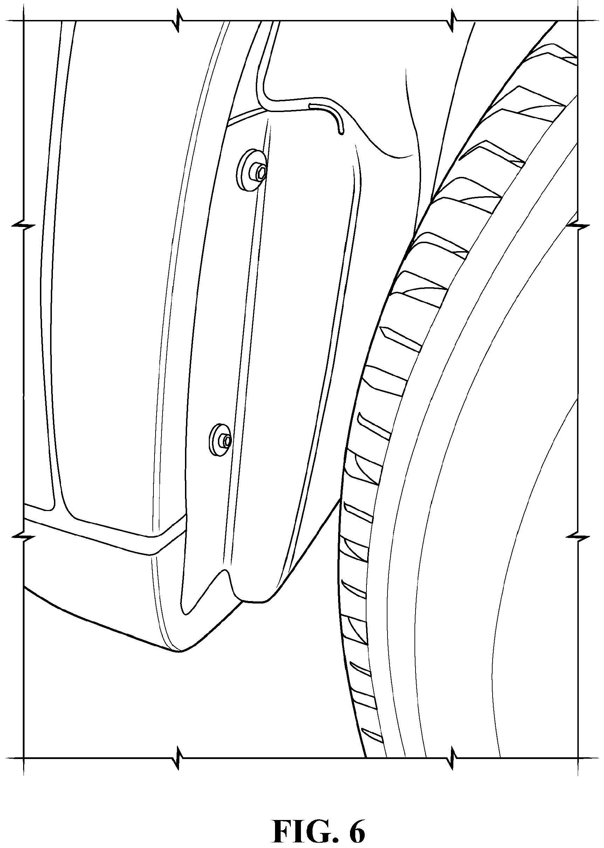

The RFTD antenna 235 is mounted in the mudguard using rubber encapsulation. The RFID antenna 235 may be provided in a plate or other plastic structure that itself is encapsulated in rubber. Alternatively, the RFID antenna 235 may be provided elsewhere in the vicinity of the wheel, and could be mounted elsewhere in the wheel well. It is preferable to mount the RFID antenna where there will be not too much variation in the spacing between it and the wheel. For example, if mounted to the top of the wheel well, the vehicle suspension system will cause significant variations of distance which can cause reading degradation. The rubber itself may be provided an embedded fabric (e.g. nylon) mesh to provide additional stiffness to the rubber. In the present example, the dimension of the rubber is of 14" x 11.25". Any extra rubber can be folded and/or cut. Figure 6 shows one implementation where the RFID antenna is mounted to the wall of the wheel well itself. In this example, the RFID antenna was protected behind a rubber shield bolted to the wheel well wall.

Although in this example, the RFID antenna 235 is mounted in the mudguard, it is to be understood that the RFID antenna 235 may be mounted elsewhere where it can read passing RFID devices so as to identify which RFID device is closest to it, e.g. by being within range of only one RFID device for portions of the RFID devices rotation on the wheel 115.

The wheel 115 comprises the set of RFID devices 300 which includes in this example four RFID devices, specifically a first RFID device 301, a second RFID device 302, a third RFID device 303 and a fourth RFID device 304. Each of the tags in the set of RFID devices are provided in the tire 116, and specifically in this example on the interior of the tire 116 such that they are invisible from the outside. This not only protects the RFID devices 300 from exterior elements but also discourages tamper or vandalism by making them hard to access and invisible to individuals who don't know they are there.

The RFID antenna 235 is mounted on the vehicle, in this case on the mudguard 125, such that it can detect the RFID devices 300 as they pass in front of it so as to allow the controller 200 to compute a wheel rotation rate. The configuration of the RFID antenna 235 and the RFID devices 300, and their installation configuration is such that during a full rotation of the wheel 115, each of the RFID device 300 is the only one to be detected by the RFID unit 230 using the RFID antenna 235 at a certain time. This allows the RFID unit 230 to interrogate the RFID devices 300 and on the basis of the detected RFID devices 300 the controller 200 can ascertain the sequence of the RFID devices 300 passing in front of the antenna 235.

By knowing when each tag passes in front of the antenna 235, the controller 200 can compute the travel distance of the vehicle. In the present example, if there are 4 tags installed equidistantly along the periphery of the tire 116. The tire 116 has a perimeter of 223 cm. Thus the tags are roughly 56 cm apart measured along the periphery of the tire 116. So if the RFID unit 230 identifies successively the first RFID device 301 then the second RFID device 302, then the processing unit 205 can ascertain that the vehicle 105 has moved forward approximately 56 cm. Moreover, where the set of RFID devices 300 comprise more than two tags, the tag ID's in the reading sequence can also be used by the processing unit 205 to observe the direction of travel.

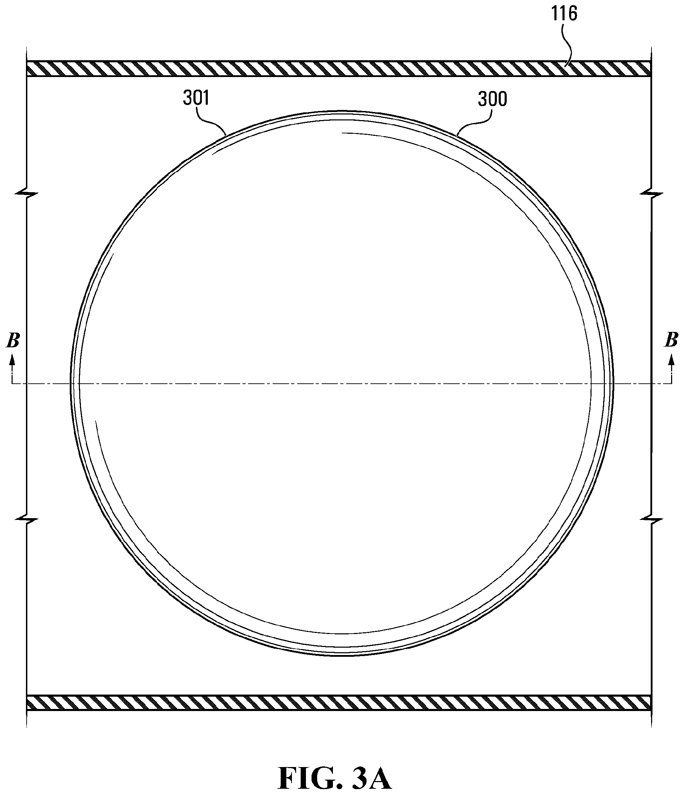

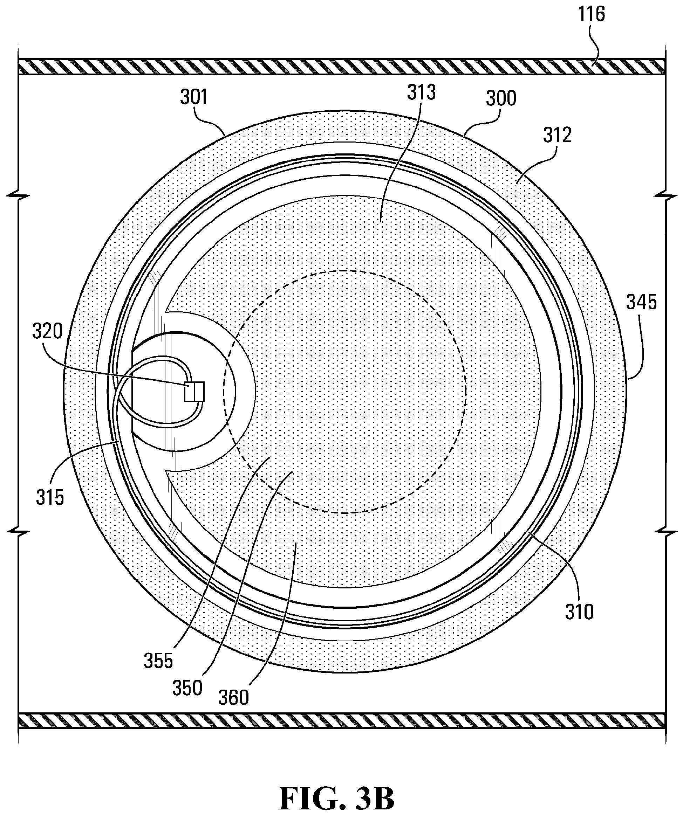

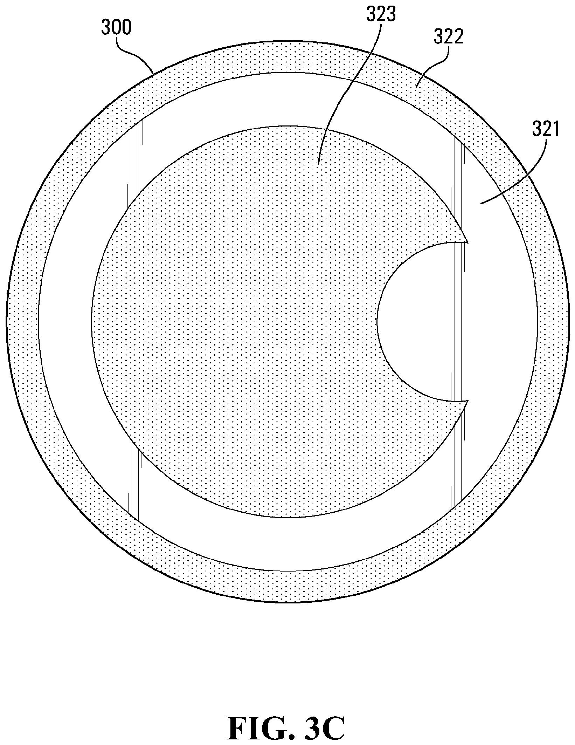

Figure 3A illustrates one of the tags from the set of RFID devices 300 from a top plan view. Figure 3B illustrates the same tag from a cross-sectional view exposing the RFID technology inside. In this particular example, the RFID device 300 is made of a two-part construction, the lower part being shown in Figure 3B and a cap portion, shown in Figure 3C, which overlap the lower part on the surface shown in Figure 3B and is sealed to it to create a single piece with a (once sealed) unitary body 305.

In this particular illustration the first RFID device 301 is shown, however in this example all of the tags in the set of RFID devices 300 are made in the same manner (although they each have unique tag identifiers). The first RFID device 301 is an affixable RFID device. It comprises a unitary body 305 within which is embedded an RFID tag 310. The RFID tag 310 comprises a tag antenna 315 and a tag chip 320 connected to the tag antenna 315 by being soldered onto a small printed circuit board (PCB) which is connected to the tag antenna 315.

The tag chip 320 is a passive HF RFID chip. Advantageously, the use of a passive HF chip allows the creation of operation conditions whereby only one tag may be read by the RFID unit 230 at certain points in the rotation of the wheel 115. This may be only a short amount of time. For example, if the vehicle 105 can travel up to 200Km/h, then the RFID devices 300 may each be within the reading range of the RFID antenna 235 for only 10ms at a time (17ms for 120Km/h). In order to maximize effectiveness, the present example provides an incredibly low reading time by enabling a fast data transfer rate with minimal data transfer. This not only allows reliable operation of the vehicle positioning system 100 at high vehicle speeds but also provides high reliability since the RFID unit 230 has the chance to read each of the RFID devices 300 more than once during the time that they pass in front of the RFID antenna 235 during normal operation of the vehicle. This allows a measure of redundancy in case a tag reading operation fails.

Testing has revealed that LF RFID tags provide data rates (1Kbit/s, 4Kbit/s, 8Kbit/s, and up) that are insufficient for this application. Testing also revealed that UHF RFID tags, which have adequate data transfer rates, are not suitable for vehicle positioning using multiple RFID tags in wheels because they are too susceptible to poor performance when water, ice, dirt and/or mud comes between or around them and the RFID antenna 235. Moreover, since UHF RFID readers are highly sensitive, they tend to pick up other tags in the area making them inadequate for vehicle positioning.

HF RFID comprises several subcategories. IS015695 is a standard for vicinity cards which can be read from a greater distance as compared to proximity cards. This standard features a data rate of 26.48Kbit/s. Testing revealed that reading the 64 bit unique ID from tags using this standard takes around 6ms, which is inadequate for the vehicle positioning system 100 to reliably read tags at a vehicle speed of 120Km/h.

ISO14443A/B is a standard for proximity cards used for identification, and the transmission protocols for communicating with it. It features a data rate of 106Kbit/s. This data rate is adequate, however this standard requires a closer reading distance, which was found in one particular implementation to be of roughly 3 inches. This may be suitable for other embodiments, however, in this particular example, the mudguard 125 was selected as a mounting point for the antenna 235, which is at a greater distance than 3 inches from the tire 116.

ISO18000-3M3 is a standard that shares a file structure like the UHF standards and the RF interface of a proximity card. It provides the advantage of great reading distance/performance while featuring high speed data rate similar to those found in UHF tags. This standard was selected in this example for the tag chip 320. Specifically, the tag chip 320 uses 13.56MHz RFID technology under the 18000-3M3 standards. Data rates range from 25Kbit/s to 100Kbit/s upload and 53Kbit/s to 848Kbit/s download. Specifically in this example the download speed (from the RFID tag 310 to the RFID unit 230) was set to 212Kbit/s which a good signal noise ratio than the higher speed setting of 848Kbit/s, leading to a greater probability of successful reading. Upload speed (from the RFID unit 230 to the RIFD tag 310) was set to 106Kbit/s.

The CLRC663 chip provides a command to read the tag in full, which takes three transactions between the reader and tag. This provides more information than is required and therefore takes more time than required. Steps are therefore taken to reduce the read time. To begin with, anti-collision, which determines how many tags are present at one time within the reader's field, is disabled since we never expect to have more than one tag in the field. Indeed in this particular example, the read range is such that when one tag is present, no other tags are within the range. The EPC (electronic product code) which is a unique number associated to each tag has a bit length that can be set to a minimum length of 16 bits, however in this example determining the unique number is not required to identify a tag. The controller 200 causes the RFID unit 230 to send an interrogation signal to the RFID device 301, whereupon the tag chip 320 receives the interrogation signal via the tag antenna 315 and provides data in return by transmitting it using the tag antenna 315. In a first transaction, the CRC stored is read. In a second transaction, the EPC is read. The third transaction of the read command provides information like the handle which are of no use for merely identifying which of the RFID devices 300 is being read.

In the present example, only the first transaction is used, which reduces the read time to around 1.2-1.5ms, although polling is done every 3ms. Reading the CRC suffices to determine which of the tags is currently proximate to the RFID antenna 235. The stored CRC (cyclic redundancy check) is a code that a tag calculates over its StoredPC and unique item identifier (UII/EPC) and stores in the UII memory at power-up, that is when the tag enters the RFID reader's radiation field.

Alternatively, only the third transaction may be omitted, for a total of two transactions, which yields in this example a reading time of around 3ms.

In the present example, in ideal conditions the RFID devices 300 may up to 4.33" away from the RFID antenna 235 in the mudguard 125 when in position in front of the RFID antenna 235, and more specifically in this example they are 13 centimeters apart.

In this particular example, RFID device 301 is a tire patch with the RFID tag 310 embedded therein. The RFID device is mounted to the inside of the tire under the crown (rather than on the sidewall). Initial tests, however, indicated that existing RFID tags and tire patch technology does not work because the high stress placed on the patch, and on the tag antenna therein leads to the rapid fracture of the antenna material.

In the present example, the RFID tag 310 has a tag antenna 315 that has a coiled planar configuration, defining a closed shape, in this case a circle. The tag antenna 315 of this example has round coil of 100mm diameter with 3 or 4 coil windings (in this example 4) of the antenna material. Other coil geometries, e.g. square or rectangular tag antennas may also be used. Increasing the tag antenna size increases the possible reading distance between the RFTD tag 310 and the RFID antenna 235, however the size is limited by the physical space available where the RFID device 301 will be mounted. In this case a diameter of 100mm was chosen in part due to the available space in the tire 116. The tag antenna 315 has characteristics on average of approximately 3.55µH // 13pF and 23pF for the RFID chip that is connected to the coil. When the coil is 100mm diameter with 3 turns the inductance has been found to be 3.54 to 3.56uH and more precisely 3.55uH. The capacitance of the coil has been found to be between 14pf and 17pf. Deviating from these preferred value, e.g. by increasing or decreasing the number of turns, has been found to cause a reduction in reading distance. In an alternate embodiments, e.g. to fit into smaller (e.g. narrower) tires, the tag antenna, made of beryllium copper, may have a diameter of 50mm and a read distance of around 7cm from the RFID antenna 235. In yet another alternate embodiment, the tag antenna may be a 46mm x 78mm rectangular antenna and have a read distance of around 10 cm from the RFID antenna 235. That said, brass coated high carbon steel has been found to be more physically resistant and better suited for use in a tire.

The RFID tag 310 is embedded into a specialized tire patch 325, having in this example a 5 inch diameter, to form the RFID device 301. The RFID device comprises a unitary body 340 having a bottom surface 330 and a top surface 335. The bottom surface 330 has an outer periphery 345, which in this example has a rounded square shape although other shapes accommodating the RFID tag 310 are possible. The unitary body 340 is defined between the bottom surface 330, the top surface 335, and within the outer periphery 345. The RFID tag 310 is embedded within the unitary body in a generally horizontal plane within the unitary body, the tag antenna 315 being generally coplanar with the horizontal plane.

In the present example, the tire patch 325 is a two-part construction made up of two layers, namely a bottom layer, shown in Figure 3B and a top layer which forms a cap portion 321, shown in Figure 3C. A circular groove 311 is provided in one of the two parts, here in the bottom layer, to receive the antenna. It has been found that immersing the antenna in rubber without an air gap decreases sensitivity and requires re-calibration and overall has adverse effect on performance. This has been found to be overcome by providing a passageway for the antenna in the form of groove 311. Two rubber gum (also known as chemical gum) patches 312, 313 are provided on the bottom layer and corresponding rubber gum patches 322, 323 are provided on the cap portion 321, whereat the two layers are vulcanized together and thus bonded, e.g. by the application of vulcanizing fluid or heat. Alternatively, other suitable method for embedding the RFID tag 310 may be used, such as placing it between two sheets of rubber that are then bonded together, however providing a groove 311 is preferred.

The unitary body 340 is a shallow body, meaning that it is generally not tall so as to stick out more than is reasonable for its application. In this particular case, in a specialized tire patch, the unitary body 340 is generally flat and has a thickness that is generally less than 20mm thick, and more particularly less than 10mm thick, and even more particularly approximately 6mm thick.

Typical tire patches have a bottom surface that is entirely vulcanized to the tire in order to patch it. It has been found that embedding the RFID tag 310 into a typical tire patch causes stress on the RFID antenna 315 that causes fracturing of the RFID antenna 315. Through experimentation it was found that stress on the tag antenna 315 can be reduced by vulcanizing only a portion of the RFID device 301 to the tire. More specifically, the RFID device 201 comprises an affixing portion 350 in the bottom surface 330 which is affixed to the tire 116, in this case by vulcanization. The RFID tag 310 tag antenna 315 is provided in the unitary body 340 such that it does not overlap the affixing portion 350. The affixing portion 350 being affixed to the tire 116 is subject to bending, compression and stretching, more generally to deformation, with the portion of the tire 116 where it is affixed. The bottom surface 330 also comprises a non-affixing portion 370 that is not vulcanized to the tire 116.

The unitary body 340 thus comprises an affixing body portion 355 which overlaps the affixing portion 350 and is therefore subject to deformation therewith and a floating portion 360, which does not overlap the affixing portion 350 and may overlap the non-affixing portion 370. The floating portion 360 of this example overlays the tire around the affixing portion 350. In this particular example the affixing portion 350 forms a slight elevation of the bottom surface 330 in the downward direction. As a result a gap 365 may exist between the floating portion 360 and the tire 116 in some portions thereof, although in alternate embodiments the bottom surface 330 may be flat, leaving no gap. In further alternate embodiments, the bottom surface 330 may be provided with a more pronounced downward extension towards or at the affixing portion 350 to raise the floating portion 360 further away from the tire 116, or may similarly have an upwardly projecting angle from the affixing portion 350 to raise the non-affixing portion 370 away from the tire 116. In one such example, the unitary body 340 has a generally mushroomoid shape such that the bottom surface 330 projects in a downward plateau at the affixing portion 350 while the non-affixing portion 370 is raised by the downward plateau away from the tire 116.

Although the floating portion 360 is not affixed to the tire 116, in the present example, it may still contact the (in this case, inner) surface of the tire 116 and rub thereagainst. However, since the floating portion 360 is not affixed to the tire beneath it, it is not forced to necessarily deform with the tire underneath it. The floating portion 360 may still be subject to some deformation imparted onto it by deformation of the affixed portion 355, although the overall effect is a reduction of the stresses on the materials within the floating portion 360.

In order to reduce the stress imparted on the RFID tag 310, and more particularly on the tag antenna 315, the RFID tag 310, and more particularly the tag antenna 315 is embedded into the unitary body in the floating portion 360. In particular, the non-affixing portion 370 surrounds the affixing portion 350 such that the floating portion 360 surrounds the affixing body portion 355. The tag antenna 315 is provided in the floating portion 360 surrounding the affixing body portion 355 and the affixing portion 350.

The affixing portion 350 can be of any shape or size sufficient to firmly hold the RFID device 301 to the tire 116. In this particular example the affixing portion is a 50mm circle, which has been found to provide sufficient bonding to the tire for a reliable long-lasting adherence. The tag antenna 315 is generally centered about the affixing portion 350, and being that it antenna has a diameter of 100mm, it lies at a good distance from the affixing portion 350, namely in this case it lies no closer than around 25mm away at every point. As a result, deformation in the unitary body 340 resulting from deformation of the tire 116 is concentrated in a single area away from the RFID tag 310 and the stress in the floating portion is dissipated radially such that little stress is absorbed by the RFID tag 310 and more particularly the tag antenna 315.

In this particular example, the unitary body 340 of the RFID device 301 is generally planar and the bottom surface 330 has a projection 375 at the affixing portion 350. The affixing portion 350 may be affixed to the tire 116 by suitable affixing technology. In this particular example, the affixing portion 350 is vulcanized to the tire 116. The vulcanization process used in this example is a chemical vulcanization. For this purpose, the affixing portion comprises a chemical gum that reacts to vulcanization fluid when applied to it so as to cause bonding with the tire 116. The rest of the unitary body 340, or more particularly the rest of the bottom surface 330, including the non-affixing portion 370, does not comprise the chemical gum, but rather cured rubber, and thus does not bond to the tire 116 when the vulcanization fluid is applied. In particular, in this example, a rubber gum is applied to the center of the unitary body 340 to create the projection 375. This rubber gum reacts with the vulcanization fluid to adhere to the tire 116. The projection 375 in the bottom surface 330 raises the non-affixing portion 370 away from the tire, as described here, which has the effect of further isolating the floating portion 360 from the tire 116 and further reducing deformation of the floating portion with the tire 116.

In alternate embodiments, other means of adhesion of the RFID device 301 to the tire 116 may be selected, provided that they provide sufficient adherence. Certain adhesive may be suitable. Some adhesives have been tried with reasonable success, although their cure times were longer than vulcanization and they did not perform as well as vulcanization. Moreover vulcanization fluid is widely available and can be found at most mechanics, thus providing another advantage.

Typical RFID tags may be made with copper antennae. This material is generally selected for its favorable electrical characteristics. However, it has been found that copper is ill-suited for the high-stress environment of the tire 116. Even with the tag antenna 315 being embedded in the floating portion 360 of the unitary body 340, the tag antenna 315 is subject to some stress from deformation that can cause fracture or breaking of the antenna on the long run. For this reason, different materials, not typical of RFID antennae have been experimented with. It was found that materials having a minimum tensile strength of over 100KPSI, and preferably 110KPSI or more, and preferably still 150KPSI or more provided the long-term longevity performance, with even better long-term longevity performance with higher tensile strengths of 398.8KPSI-442.2KPSI.

Through experimentation with various materials, it was found that Beryllium Copper provides a respectable performance for long-term durability. Specifically, Beryllium Copper Alloy 25 CDA 172 was used, which has a minimum tensile strength of 150KPSI. Rather than providing the tag antenna 315 on a rigid board, Beryllium Copper wire of 0.010" was used, insulated with VG Bond Coat and coiled on a brace while current is run through the wire to heat it up. The tag antenna 315 so created is then soldered to the tag chip 320 and is embedded directly into the unitary body 340.

Through further experiment an even more preferable antenna construction has been found, specifically hose wire made of brass coated high carbon steel at 0.250mm (0.010'), which has a tensile strength of 2750-3050N/mm² or 398.8KPSI-442.2KPSI. The wire is insulated with a heavy coat of PAC-240 polyimide wire insulation and Bond E1, which is a thermoplastic modified epoxy bond coat. With the polyimide, the overall wire diameter is of approximately 0.2946mm (0.0116"), while with the Bond E1 the diameter is approximately 0.3353mm (0.0132"). Heat or chemicals may be used to bond the wires together; Bond E1 reflows at 130°C. In order to protect the wire and keep it intact, a last layer of epoxy is applied. Embedding the tag antenna with epoxy allows it to keep its shape under the high stresses applied by the tires in movement. This coil is then placed the rubber patch groove 311 as described above.

Other materials for the tag antenna 315 are possible. Carbon fiber may have the required strength, however it is particularly difficult to solder. Phosphor Bronze has been used with some success. Phosphor Bronze has a minimum tensile strength of 110KPSI and performed adequately for a certain duration, albeit not necessarily the lifetime of the tires.

The tire 116 comprising the RFID devices 300 is a novel tire that provides new functionality including the ability to do vehicle positioning using the vehicle positioning system 100. In the example provided herein, the RFID device 301 (which is similar to all the other RFID devices 300), is provided as an affixable patch. Advantageously, this makes it possible to install it into any tire for any vehicle, or at least any tire for which the patch is properly dimensioned. In an alternative embodiment, however, the RFID devices 300 may be built into the tire at manufacture, either by being affixed thereto at manufacture or by being molded as part of the tire. In the latter case the affixing portion of the bottom surface is in fact bonded by unitary construction with the rest of the tire.

While in the illustrated example, the tire 116 was provided four RFID devices 300, in alternate examples, more or fewer may be used. Naturally, varying the number of RFID devices 300 varies their distances and the controller 200 must take the distance between RFID 300 into account when computing vehicle positioning. Moreover, although in the present example the RFTD devices 300 are equidistant from one another along the periphery of the tire 116, in alternate embodiments they may not necessarily be so. In such cases, the controller 200 may take into account the distance between RFID devices 300 to compute positional information. The controller 200 may be configured to perform a calibration, whereby the tire 116 is rotated by known amounts, and the amount of rotation is provided to the controller 200 to allow the controller 200 to count the distance between RFID devices 200.

For simplicity, only one RFID antenna 235 and only one tire 116 with RFID devices 300 was shown in this example. However, this system may be replicated for other wheels 110 of the vehicle 105. To this end, the controller 205 may have multiple RFID units 230 to detect rotation of multiple wheels 110. This may provide a measure of redundancy, particularly at high speeds when tag misreads may be more common. The present system is already resistant to some tag misreads, since it can interpolate positional information even in the absence of a certain number of tag reads, but providing redundancy can provide it even greater precision.

In the present example, the controller 200 merely uses RFID unit 230 to read the tags in the RFID devices 300. The tag IDs read by the RFID unit 230 allow the controller 200 to track to movement of the vehicle. By knowing the distance between RFID devices 300 and knowing their order on the wheel 115, the controller computes a change is position on the basis of the distance between RFID devices 300. E.g. if the tags are 56 cm apart, and RFID device 302 follows RFID device 301, and that the RFID unit 230 reads these tags in order, the controller 200 ascertains that the vehicle 105 has moved forward by 56 cm.

However, in alternate embodiments, the RFID unit 230 may also perform writing operations to the RFID tags in the RFID devices 300. This is particularly possible where the tire 116 is used in a low-speed environment, or where the transfer rate between the RFID unit 230 and the RFID devices 300 is high, e.g. if the distance between the RFID antenna 235 and the RFID devices 300 is reduced or if higher -throughput protocols are used. In such cases, the controller 200 may provide information into the RFID devices 300 e.g. for tracking purposes. In one example, the controller 200 may implement a turn-counting method whereby a count value is incremented in the RFID tag of each RFID device 300 at every turn. In this manner, the RFID devices 300 may be used as a type of tire odometer, counting the wear put on a tire. In a variation on this design, each of the RFID devices 300 may begin with a count that differs by a value (e.g. 1) and they may each be incremented by a non-overlapping amount (e.g. by the number of tags, in this case 4). The count value, being that it will necessarily always have the same modulus of 4 (in this example), can serve as a tag ID. In this example, a count of 1, 5, 9, 13, etc... would indicate RFID device 301; a count of 2, 6, 10, 14, etc... would indicate RFID device 302; a count of 3, 7, 11, 15, etc... would indicate RFID device 303; and a count of 4, 8, 12, 16, etc... would indicate RFID device 304. When the controller reads an RFID device, it stores the count value at least until it reads the following one. It then verifies whether the following RFTD device has the right count value, or if it was the subject of a misread/miswrite at the last rotation. If it was, the controller commands an increment by the appropriate amount to correct the value. In this manner a misread/miswrite-resistant tire odometer may be implemented.

Although in the examples provided herein the controller 200 was implemented as a separate device, it will be understood that in an alternate example where the vehicle 105 comprises suitable hardware in its onboard computer, the controller 200, or parts thereof, may be implemented by the onboard computer. In one example, the RFID unit 230 is provided to the vehicle 105 and placed in communication with the onboard computer that is reprogrammed to perform the function of the controller 200.

In an exemplary embodiment not being part of the claimed invention is provided a vehicle positioning system for determining the position of a vehicle. The vehicle positioning system may comprise an RFID antenna mount, for example mudguard 125, configured for mounting an RFID antenna on the vehicle in proximity to a wheel having a tire. The mudguard 125 may comprise any standard mudguard attachment means. The vehicle system also comprises an RFID antenna for mounting on the RFID mount. For example the RFID antenna 235 comes pre-mounted in the mudguard 125 by being embedded therein, e.g. by being molded therein. The antenna is configured for communicating with a proximate RFID tag located in the wheel, and more particularly in the tire, in proximity to the RFID transceiver to interrogate the proximate RFID tag and to detect a return signal indicative of a tag identifier associated with the proximate RFID tag. The vehicle positioning system comprises a controller configured for communicating with the RFID antenna to cause the interrogating of the proximate RFID tags and to receive the return signal. The controller is configured to determine, at least in part on the basis of a return signal and a previously-received return signal, a position of the vehicle. The controller is also configured output an indication of the position of the vehicle. The indication of the position of the vehicle may be provided in any of a number of ways. Where the controller 200 acts as an improved GPS system, the position information may be provided visually on a screen (not shown) as would be typically done by a GPS system. Alternatively or additionally, the positional information may also be provided over the wireless communication unit 270, USB interface 280, or network interface 285.

The controller may be configured to compute a reckoned distance of travel by performing dead reckoning whereby the reckoned distance of travel is based on the distance between the most recently (proximate) RFTD tag and a previous RFID tag. More specifically, the reckoned direction of travel may be found by determining a rotation of the tire that was undergone between receiving the return signal and a previously-received return signal from the previous RFID tag. In particular, using dead reckoning the controller 200 can consider the distance between the latest and previous tag reads to be the distance between the tags on the periphery of the tire 116.

The different RFID tags may have unique identifiers provided with their return signals and the controller 200 may ascertain the reckoned distance of travel based on the number of successive return signals received and a distance separating the RFID tags associated with the return signals. The controller 200 may take into account the previous tag identifier and ascertain a distance travelled based on the current and the previous tag identifier received, thus accounting for a misread if one tag identifier was skipped. On the basis of the current and previous tag identifier, the controller 200 may also determine the direction the vehicle is moving, provided that more than 2 tags are provided on the tire.

The position determined by the controller 200 may be a relative position, the controller 200 only determining a distance of travel, or the position may be absolute. For example the controller 200 may be configured to determine the position of the vehicle on the basis of GPS position data and the reckoned distance of travel of the vehicle.

Although various embodiments have been illustrated, this was for the purpose of describing, but not limiting, the present invention. Various possible modifications and different configurations will become apparent to those skilled in the art and are within the scope of the present invention, which is defined by the attached claims.

## Claims

1. An HF RFID device (301) for affixing to a surface of a vehicle tire (116) comprising:
a. a unitary body (340) having a bottom surface (330) defined within a bottom surface outer periphery (345) and a top surface (335);
b. an HF RFID tag (310) embedded within the unitary body in a generally horizontal plane
within the unitary body, the RFID tag comprising:
i. a coil antenna (315) comprising a single filament coiled in a planar
configuration that is coplanar with the horizontal plane, the coil antenna defining a closed shape defining within the plane an interior and an exterior of the closed shape;
ii. an HF RFID chip (320) in electric communication with the coil antenna for
receiving an interrogation signal over the coil antenna and transmitting back identification information identifying the HF RFID chip; **characterized in that** the bottom surface comprises an affixing portion (350) that is configured for affixing to the surface of the vehicle tire and a non-affixing portion (370) surrounding
the affixing portion at an outer periphery thereof, the unitary body having an affixing body portion (355) overlapping the affixing portion and a floating portior (360) overlapping the non-affixing portion, the floating portion completely surrounding the affixing body portion.

2. The HF RFID device of claim 1, wherein the HF RFID tag is embedded in the unitary body such that the coil antenna is entirely contained within the floating portion.

3. The HF RFID device of claim 2, wherein the coil antenna surrounds the affixing body portion.

4. The HF RFID device of any of claims 1-3, wherein the bottom surface comprises a projection, the affixing portion being defined on the projection.

5. The HF RFID device of any of claims 1-4, wherein the affixing portion comprises chemical gum for affixing the HF RFID device to the surface of the tire by vulcanization.

6. The HF RFID device of any of claims 1-5, wherein the coil antenna comprises a coil of material having a tensile strength of at least 2750 N/mm².

7. The HF RFID device of claim 6, wherein the coil antenna comprises a coil of brass-coated high carbon steel.

8. The HF RFID device of claim 6, wherein the unitary body comprises a groove for receiving the coil antenna which provides an air gap around the coil antenna.

9. A tire comprising at least one HF RFID device as defined in any of claims 1-8.

10. The tire of claim 9, wherein the RFID device is affixed to the interior of the tire about the tire periphery; and wherein the HF RFID device is a first RFID device, the tire comprising a plurality of RFID devices affixed along the interior of the tire about the tire periphery.

## Patentansprüche

1. HF-RFID-Gerät (301) zum Befestigen an einer Oberfläche eines Fahrzeugreifens (116), umfassend:
a. einen unitären Körper (340), der eine Unterseite (330), die innerhalb eines Unterseitenaußenumfangs (345) definiert ist, und eine Oberseite (335) aufweist,
b. ein HF-RFID-Etikett (310), das in einer im Wesentlichen horizontalen Ebene innerhalb des unitären Körpers in den unitären Körper eingebettet ist, wobei das RFID-Etikett umfasst:
i. eine Spulenantenne (315), die ein Einzelfilament umfasst, das in einer ebenen Gestaltung gewickelt ist, die koplanar mit der horizontalen Ebene liegt, wobei die Spulenantenne eine geschlossene Form definiert, die innerhalb der Ebene ein Inneres und ein Äußeres der geschlossenen Form definiert,
ii. einen HF-RFID-Chip (320) in elektrischer Verbindung mit der Spulenantenne, um ein Abfragesignal über die Spulenantenne zu empfangen und Identifizierungsinformationen, die den HF-RFID-Chip identifizieren, zurückzusenden,
**dadurch gekennzeichnet, dass**
die Unterseite einen Befestigungsabschnitt (350), der für das Befestigen an der Oberfläche des Fahrzeugreifens gestaltet ist, und einen Nicht-Befestigungsabschnitt (370), der den Befestigungsabschnitt an dessen Außenumfang umgibt, umfasst, wobei der unitäre Körper einen Befestigungskörperabschnitt (355), der den Befestigungsabschnitt überlappt, und einen schwebenden Abschnitt (360), der den Nicht-Befestigungsabschnitt umgibt, aufweist, wobei der schwebende Abschnitt den Befestigungsabschnitt vollständig umgibt.

2. HF-RFID-Gerät nach Anspruch 1, wobei das HF-RFID-Etikett derart in den unitären Körper eingebettet ist, dass die Spulenantenne gänzlich in dem schwebenden Abschnitt enthalten ist.

3. HF-RFID-Gerät nach Anspruch 2, wobei die Spulenantenne den Befestigungskörperabschnitt umgibt.

4. HF-RFID-Gerät nach einem der Ansprüche 1 bis 3, wobei die Unterseite einen Vorsprung umfasst, wobei der Befestigungsabschnitt auf dem Vorsprung definiert ist.

5. HF-RFID-Gerät nach einem der Ansprüche 1 bis 4, wobei der Befestigungsabschnitt ein chemisches Gummi zum Befestigen des HF-RFID-Geräts an der Oberfläche des Reifens durch Vulkanisierung umfasst.

6. HF-RFID-Gerät nach einem der Ansprüche 1 bis 5, wobei die Spulenantennen eine Spule aus einem Material umfasst, das eine Zugfestigkeit von mindestens 2750 N/mm² aufweist.

7. HF-RFID-Gerät nach Anspruch 6, wobei die Spulenantennen eine Spule aus messingbeschichtetem Hartstahl umfasst.

8. HF-RFID-Gerät nach Anspruch 6, wobei der unitäre Körper eine Rille zum Aufnehmen der Spulenantenne umfasst, die einen Luftspalt rings um die Spulenantenne bereitstellt.

9. Reifen, mindestens ein HF-RFID-Gerät nach einem der Ansprüche 1 bis 8 umfassend.

10. Reifen nach Anspruch 9, wobei das RFID-Gerät an dem Inneren des Reifens um den Reifenumfang befestigt ist, und
wobei das HF-RFID-Gerät ein erstes RFID-Gerät ist, wobei der Reifen mehrere RFID-Geräte umfasst, die entlang des Inneren des Reifens um den Reifenumfang befestigt sind.

## Revendications

1. Dispositif RFID HF (301) pour fixer à une surface d'un pneu de véhicule (116) comportant :
a. un corps unitaire (340) ayant une surface inférieure (330) définie dans les limites d'une périphérie extérieure de surface inférieure (345) et une surface supérieure (335) ;
b. une étiquette RFID HF (310) embarquée à l'intérieur du corps unitaire dans un plan généralement horizontal à l'intérieur du corps unitaire, l'étiquette RFID comportant :
i. une antenne à bobine (315) comportant un seul filament enroulé selon une configuration plane qui est coplanaire par rapport au plan horizontal, l'antenne à bobine définissant une forme fermée définissant dans les limites du plan une partie intérieure et une partie extérieure de la forme fermée ;
ii. une puce RFID HF (320) en communication électrique avec l'antenne à bobine servant à recevoir un signal d'interrogation par le biais de l'antenne à bobine et à transmettre en retour des informations d'identification identifiant la puce RFID HF ;
**caractérisé en ce que** la surface inférieure comporte une partie de fixation (350) qui est configurée pour fixer à la surface du pneu de véhicule et une partie de non-fixation (370) entourant la partie de fixation au niveau d'une périphérie extérieure de celle-ci, le corps unitaire ayant une partie de corps de fixation (355) chevauchant la partie de fixation et une partie flottante (360) chevauchant la partie de non-fixation, la partie flottante entourant complètement la partie de corps de fixation.

2. Dispositif RFID HF selon la revendication 1, dans lequel l'étiquette RFID HF est embarquée dans le corps unitaire de telle sorte que l'antenne à bobine est entièrement contenue à l'intérieur de la partie flottante.

3. Dispositif RFID HF selon la revendication 2, dans lequel l'antenne à bobine entoure la partie de corps de fixation.

4. Dispositif RFID HF selon l'une quelconque des revendications 1 à 3, dans lequel la surface inférieure comporte une partie faisant saillie, la partie de fixation étant définie sur la partie faisant saillie.

5. Dispositif RFID HF selon l'une quelconque des revendications 1 à 4, dans lequel la partie de fixation comporte de la gomme chimique servant à fixer le dispositif RFID HF sur la surface du pneu par vulcanisation.

6. Dispositif RFID HF selon l'une quelconque des revendications 1 à 5, dans lequel l'antenne à bobine comporte une bobine d'un matériau ayant une résistance à la traction d'au moins 2750 N/mm².

7. Dispositif RFID HF selon la revendication 6, dans lequel l'antenne à bobine comporte une bobine en acier à forte teneur en carbone revêtu de laiton.

8. Dispositif RFID HF selon la revendication 6, dans lequel le corps unitaire comporte une rainure servant à recevoir l'antenne à bobine qui procure un entrefer autour de l'antenne à bobine.

9. Pneu comportant au moins un dispositif RFID HF selon l'une quelconque des revendications 1 à 8.

10. Pneu selon la revendication 9, dans lequel le dispositif RFID est fixé sur la partie intérieure du pneu autour de la périphérie du pneu ; et
dans lequel le dispositif RFID HF est un premier dispositif RFID, le pneu comportant une pluralité de dispositifs RFID fixés le long de la partie intérieure du pneu autour de la périphérie du pneu.
